Europäisches Patentamt

European Patent Office

Office européen des brevets

(11) Numéro de publication: **0 322 265 B1**

# FASCICULE DE BREVET EUROPEEN

(45) Date de publication de fascicule du brevet: **16.09.92**  (51) Int. Cl.5: **F16D 23/12**, F16D 25/08, F16D 13/75

(21) Numéro de dépôt: **88402940.6**

(22) Date de dépôt: **24.11.88**

(54) **Dispositif de commande d'embrayage, notamment pour véhicules automobiles.**

(30) Priorité: **25.11.87 FR 8716331**

(43) Date de publication de la demande:
**28.06.89 Bulletin 89/26**

(45) Mention de la délivrance du brevet:
**16.09.92 Bulletin 92/38**

(84) Etats contractants désignés:
**DE ES FR GB IT**

(56) Documents cités:
| EP-A- 0 199 642 | DE-A- 2 449 434 |
| DE-C- 590 140 | FR-A- 1 587 732 |
| FR-A- 2 571 868 | US-A- 1 438 486 |
| US-A- 3 071 228 | US-E- 20 508 |

(73) Titulaire: **VALEO, Société Anonyme dite:**
**64 Avenue de la Grande Armée**
**F-75017 Paris(FR)**

(72) Inventeur: **Bacher, Michel**
**14, rue du Clos David**
**F-95580 Andilly(FR)**
Inventeur: **Martinez Corral, Cecilio**
**74, rue Agastia**
**E-28043 Madrid(ES)**

(74) Mandataire: **Gamonal, Didier**
**Société VALEO Service Propriété Industriel-**
**le 30, rue Blanqui**
**F-93406 Saint Ouen(FR)**

## Description

La présente invention se rapporte aux dispositifs de commande d'embrayage, notamment pour véhicules automobiles, du genre comportant, pour la manoeuvre d'un organe de débrayage destiné à agir sur le dispositif débrayeur d'un embrayage, des moyens de support dudit organe de débrayage, destinés à être fixés sur un support fixe en translation, et des moyens de commande dudit organe de débrayage. Usuellement les moyens de commande consistent en une fourchette de débrayage actionnée par un câble, formant un moyen d'actionnement pour ladite fourchette, relié à une pédale.

Les moyens de support consistent en un tube guide ou trompette entourant l'arbre d'entrée de la boîte de vitesses, le long duquel coulisse une butée de débrayage formant l'organe de débrayage.

La fourchette, ainsi que la trompette, sont montées sur le carter de la boîte de vitesses.

Il en résulte que la taille de l'organe de débrayage est déterminée par la trompette et que, la fourchette étant distincte de la trompette, de nombreuses phases sont nécessaires au montage.

Pour simplifier le montage on peut songer à créer un sous-ensemble hydraulique, par exemple sous la forme d'un vérin hydraulique à cylindre et piston.

Une telle disposition est coûteuse à cause des étanchéités à assurer et en outre, des problèmes de purges sont à résoudre au montage.

On a déjà proposé lorsque l'embrayage est localisé en bout de l'ensemble d'entraînement comme décrit dans le document EP-A-0 199 642, de loger les moyens de commande à l'intérieur d'une cartouche rainurée, formant tube guide, solidaire d'un flasque rapporté sur le carter de l'embrayage ; ladite cartouche portant centralement un organe moteur rotatif, en sorte de créer un ensemble manipulable et transportable ou module.

Dans cette solution les moyens de commande sont mécaniques et comportent, d'une part, une pièce menante (une vis) portée par la cartouche, fixe en translation et soumise à l'action du moteur électrique et, d'autre part, une pièce menée (un écrou) fixe en rotation et soumise à l'action de la pièce menante.

Des moyens de rampes complémentaires sont prévus sur la pièce menante et menée (système vis-écrou), avec déplacement de la pièce menée par rapport aux moyens de support.

Une telle disposition est plus encombrante axialement qu'une disposition à fourchette de débrayage, elle-même très encombrante, car la vis traverse de part en part la butée de débrayage, et est engagée partiellement dans l'arbre de sortie de la boîte de vitesses convenablement évidée à cet effet.

En outre, elle ne peut être mise en oeuvre lorsque le dispositif de commande est localisé entre le moteur et la boîte de vitesses en étant traversé par l'arbre d'entrée de celle-ci, les pièces menante et menée ne pouvant convenir.

La présente invention a pour objet de pallier ces inconvénients et donc de créer une nouvelle disposition avec des moyens de commande mécanique en deux parties d'un emploi universel formant avec les moyens de support un ensemble compact, tout en procurant d'autres avantages.

Suivant l'invention un dispositif de commande du type sus-indiqué est caractérisé en ce que la pièce menante est creuse, en ce que la pièce menante porte à sa périphérie externe lesdits moyens d'engagement pour engagement mutuel avec des moyens d'actionnement, en ce que la pièce menée est montée dans le prolongement axial de la pièce menante et en ce que, ladite pièce menée porte intérieurement une portion de support pour attelage de l'organe de débrayage aux moyens de commande.

Grâce à l'invention, la pièce menée peut être portée et centrée par les moyens de rampe de la pièce menante. On appréciera la compacité de l'ensemble car la pièce menante n'a pas à traverser l'organe de débrayage.

De plus, ledit organe n'est animé que d'un mouvement de translation, ce qui est favorable à la réduction des usures et au maintien de l'auto-centrage notamment lorsqu'il s'agit d'une butée de débrayage à auto-centrage maintenue comme décrit dans le brevet FR - A-1 467 848.

On appréciera que la taille de l'organe de débrayage peut être réduite et n'est pas déterminée par un quelconque guide. De plus, les pièces menée et menante sont d'un emploi universel l'arbre d'entrée de la boîte de vitesses pouvant pénétrer à l'intérieur desdites pièces.

En outre, de la place est libérée à la périphérie externe desdites pièces menante et menée, en sorte que l'on peut disposer aisément par exemple un capteur d'usure ou un rattrapage d'usure.

Avantageusement, des moyens anti-friction sont prévus entre les moyens de rampes des pièces menante et menée. Il peut s'agir par exemple de billes interposées entre lesdits moyens de rampes.

Avantageusement, la pièce menée est portée directement par la pièce menante et les moyens de liaison en rotation consistent en au moins un élément élastique d'orientation circonférentiel. Ceci permet de diminuer encore les frottements, ainsi que de simplifier la fabrication de l'ensemble en évitant tout coincement.

Avantageusement, la pièce menante est portée par les moyens de support grâce à un palier anti-friction par exemple, un roulement à billes à contacts obliques.

Dans ce cas, il y a encaissement des efforts radiaux et axiaux par ledit roulement. Grâce à ceci la pièce menante est toujours bien équilibrée et les frottements sont encore réduits.

La pièce menée peut venir coiffer la pièce menante en section axiale une forme de U avec un rebord radial pour attelage de l'organe de débrayage et réduction de l'encombrement axial.

La description qui va suivre illustre l'invention en référence aux dessins schématiques annexés dans lesquels :

- la figure 1 est une vue de face du dispositif de commande suivant l'invention ;
- la figure 2 est une vue en coupe suivant la ligne II-II de la figure 1 ;
- la figure 3 est une vue en coupe suivant la ligne III-III de la figure 1 ;
- la figure 4 est une vue en coupe suivant la ligne IV-IV de la figure 3 ;
- la figure 5 est une vue développée suivant la ligne V-V de la figure 1 pour la position embrayée de l'embrayage ;
- la figure 6 est une vue identique à la figure 5 pour une position intermédiaire ;
- la figure 7 est une vue en perspective de la pièce menante ;
- la figure 8 est une vue en perspective de la pièce menée ;
- la figure 9 est une vue, semblable à la figure 4, d'une variante de réalisation ;
- la figure 10 est une vue partielle correspondant à la figure 2 pour une seconde variante de réalisation ;
- la figure 11 est une vue, partiellement en coupe, d'une troisième variante de réalisation ;
- les figures 12 et 13 sont des vues analogues aux figures 2 et 4 pour une quatrième variante de réalisation.
- la figure 14 est une vue schématique développée axialement de la quatrième variante de réalisation pour la position embrayage engagée.

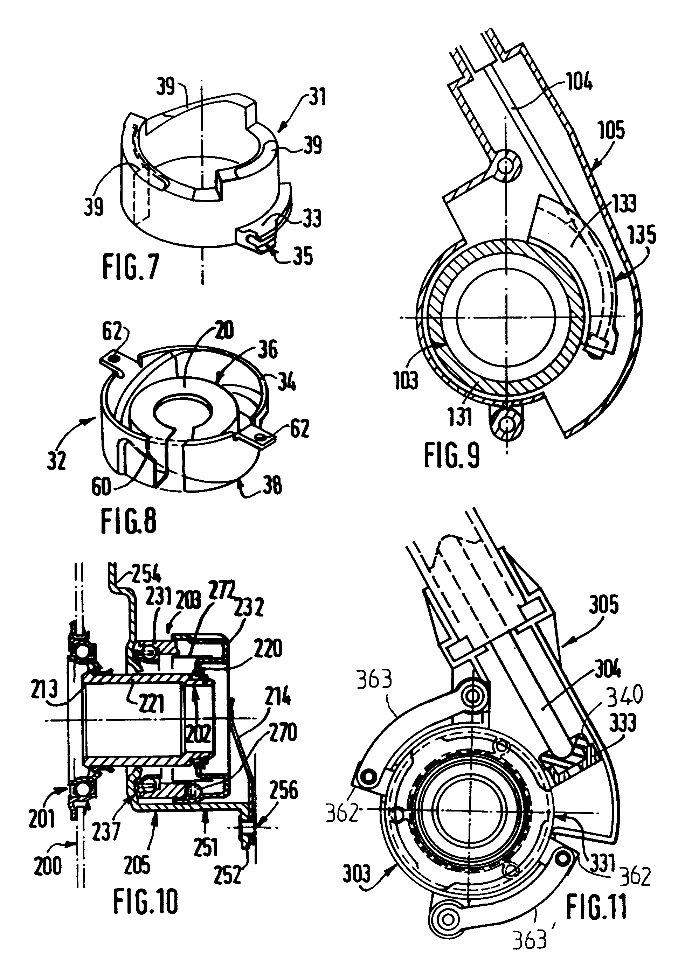

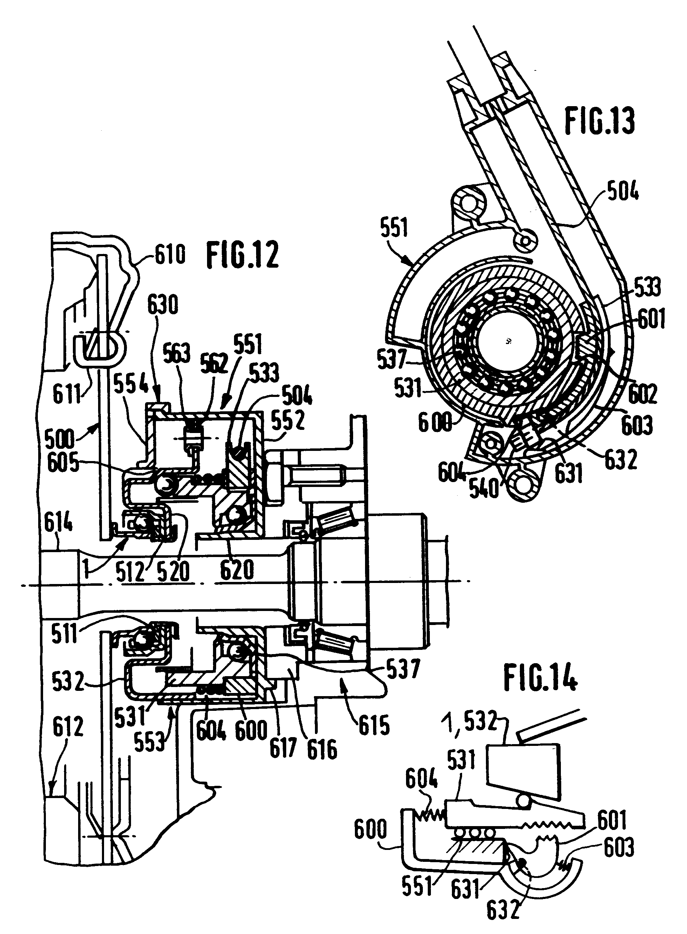

Sur les figures on voit en 1 l'organe de débrayage, ici une butée de débrayage, destiné à agir sur le dispositif débrayeur de l'embrayage représenté partiellement aux figures 8 et 12. L'organe 1 est positionné radialement vis-à-vis du dispositif débrayeur par des moyens de positionnement 2 et son déplacement en translation est commandé par des moyens de commande 3.

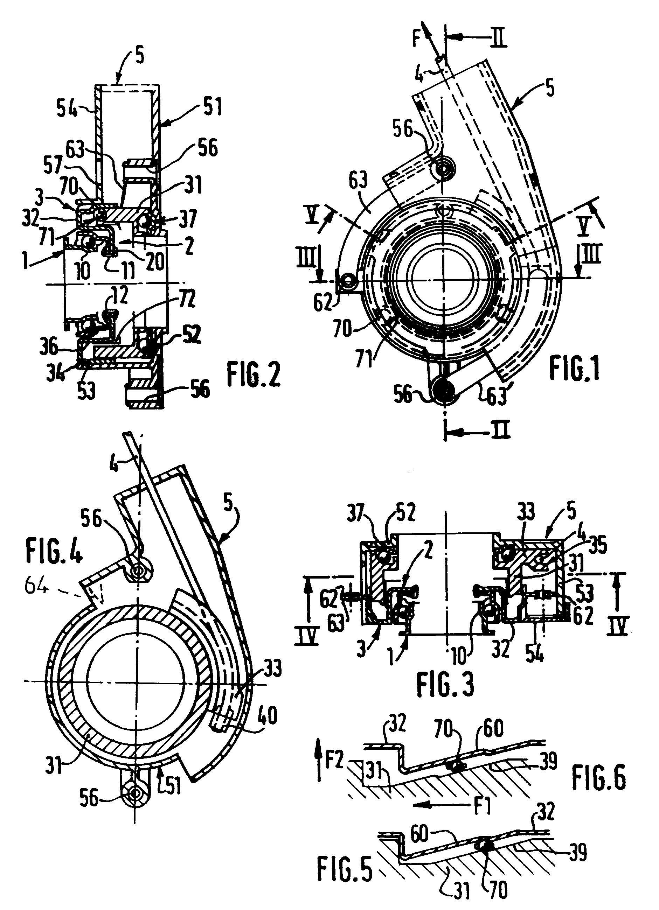

Lesdits moyens 3 sont soumis à l'action tangentielle d'un moyen d'actionnement, par exemple un câble d'embrayage 4 visible sur les figures 1, 4 et 9, ou une tige (figure 11).

Suivant une caractéristique de l'invention, ces différents éléments sont regroupés dans un boîtier 51, constituant des moyens de support pour l'organe de débrayage 1, et forment avec ledit boîtier un module monobloc 5 manipulable et transportable.

Le boîtier 51 présente un flasque transversal 52 et une paroi d'orientation axiale 53 qui en dépend. Il est fermé partiellement par un couvercle 54 rapporté par exemple par clipsage sur la paroi 53. Le flasque 52 présente des ouvertures 56 pour permettre le passage de moyens de fixation, tels que des vis, pour la fixation du module 5 sur un support fixe en translation, ici la boîte de vitesses représentée partiellement à la figure 12. Sur le couvercle 54, est prévue une ouverture 57 (figure 2) associée à l'une des ouvertures 56 pour le passage d'un outil. Le couvercle 54 et le flasque 52 sont centralement évidés pour passage de l'arbre d'entrée de la boîte de vitesses.

Lors du montage sur véhicules (figure 1) il suffit ainsi de fixer le module 5 sur la boîte de vitesses, et d'attacher l'extrémité libre du câble d'embrayage 4 au dispositif de transmission de l'ordre de commande de l'embrayage à savoir la pédale d'embrayage ou tout autre moyen moteur piloté soit par le conducteur du véhicule automobile, soit par un calculateur.

Les moyens de commande 3 comportent une pièce menante 31 et une pièce menée 32 disposées dans le prolongement axial l'une de l'autre suivant une disposition caractéristique de l'invention. Lesdites pièces 31 et 32 sont creuses en étant montées de manière coaxiale et échelonnées axialement, la pièce menante 31 étant portée par lesdits moyens de support en étant fixe en translation et mobile en rotation, tandis que la pièce menée 32 est mobile en translation et fixe en rotation.

La pièce menante 31 (figure 7), d'orientation axiale, a globalement la forme d'un cylindre creux et porte à sa périphérie externe un flasque 33 s'étendant sur un secteur angulaire réduit et conformé à sa périphérie externe en une rainure 35 située à distance constante de l'axe de l'ensemble. Cette pièce menante 31 est portée par les moyens de support 51 et est destinée à être soumise à des moyens d'actionnement comportant dans les figures 1 à 8 le câble 4.

Le câble 4 est positionné dans cette rainure 35 et son extrémité est fixée par tous moyens connus 40 contre un bord radial libre du flasque 33.

Le moyen 40 consiste ici, en une butée sertie sur le câble et fixée sur le flasque 33 par coopération de forme en étant engagée dans l'extrémité libre de la rainure 35. Ici, le flasque 33 est d'un seul tenant avec la pièce menante 31, qui porte ainsi à sa périphérie externe des moyens d'engagement 33, 35 pour engagement mutuel avec les moyens d'actionnement.

Comme visible à la figure 4 le câble 4 s'enroule autour de la pièce menante 31, de forme annulaire, puis s'en éloigne tangentiellement. L'effort exercé par le câble 4 sur la pièce 31 est donc tangentiel ce qui permet l'entraînement en rotation de la pièce 31 autour de son axe. Pour faciliter cette rotation, on prévoit un palier anti-friction entre la pièce menante et le flasque 52. Ici, il s'agit d'un roulement de réaction 37 à billes à contacts obliques capable d'absorber les charges axiales et radiales, qui peuvent être transmises à la pièce menante 31. En effet, celle-ci est au travers de la butée 1 et de la pièce menée 32, soumise à l'action axiale du dispositif débrayeur de l'embrayage, (visible aux figures 10 et 12) De plus, elle est soumise à une action radiale de la part du câble 4. On notera (figure 2) que la pièce annulaire 31 forme elle- même, à son extrémité adjacente au flasque 52, l'une des bagues du roulement 37, et qu'elle est dotée d'un retour axial pour formation d'un passage étroit et étanchéité du roulement.

Avantageusement la pièce 31 peut être obtenue par moulage. L'autre bague du roulement 37 est formée par une pièce conformée et logée dans le flasque 52.

La face transversale extrême de la pièce 31 dirigée vers le couvercle 54 et tournée vers la pièce menée 32 porte des moyens de rampe 39. Ces moyens consistent ici en des rampes hélicoïdales faisant varier la longueur axiale de l'ensemble pièce menante-pièce menée en fonction de la position circonférentielle considérée.Ici trois rampes 39 sont prévues raccordées les unes aux autres par décrochement axial.

La pièce menée 32 (figure 8), également de forme annulaire et creuse, présente deux couronnes 34, 36 coaxiales dirigées axialement et espacées radialement de manière à ce que la pièce menante puisse pénétrer axialement dans l'espace libre délimité par elles. Cette pièce menée 32 est destinée à agir sur l'organe de débrayage en étant liée en rotation aux moyens de support par des moyens de liaison en rotation de manière décrite ci-après.

Les deux couronnes 34, 36 sont réunies, du côté opposé au flasque 52 tourné vers le dispositif débrayeur, par une paroi de fond 38 conformée en moyens de rampes 60 complémentaires aux moyens de rampe 39. Les moyens de rampes consistent ici en trois rampes hélicoïdales 60 partant du fond 38 et s'érigeant en direction de l'extrémité libre de la couronne 34 la plus externe.

Avantageusement la pièce 32 est en tôle et a ainsi en section axiale une forme de U. Des moyens antifriction sont prévus entre les rampes 39 et 60. Ici, il s'agit de billes 70 pouvant se déplacer le long des rampes 39 et 60. Ces billes 70, au nombre de trois à savoir une par rampes 39, 60, sont maintenues en place par une cage 71 présentant un prolongement axial 72 s'étendant entre la pièce menante 31 et la couronne 36 afin d'assurer une étanchéité par passage étroit. Ainsi, les moyens de rampes 39,60 complémentaires sont montés bout à bout, les rampes 60 s'étendant radialement plus vers l'extérieur. Lesdits moyens de rampes 39, 60 permettent un entraînement de la pièce menée 32 par la pièce menante 31 et déplacement axial de ladite pièce menée 32 par rapport auxdits moyens de support 51 à 54 de manière décrite ci-après.

Un passage étroit existe également entre la couronne 34 extérieure et la paroi 53, en sorte que, le couvercle 54 n'a pas besoin de recouvrir totalement la pièce menée, seule la partie au niveau du flasque 33 étant recouverte comme mieux visible à la figure 1.

On notera que la couronne 34 extérieure recouvre partiellement la périphérie externe de la pièce menante 31 et que la pièce menée est centrée et guidée par la pièce menante en étant entraînée par celle-ci, sans contact avec la paroi 53.

A son extrémité opposée au fond 38 la couronne 34 présente deux bras radiaux 62, diamétralement opposés dirigés vers l'extérieur et permettant la fixation de languettes 63, 63'. Ces languettes, au nombre de deux ici, par leur autre extrémité sont, pour l'une 63 fixée au flasque transversal 52 par un rivet creux positionné dans l'ouverture 56 et, pour l'autre 63' en appui simplement sur ledit flasque 52. Ces languettes sont globalement en forme de secteur circulaire et entourent la pièce menante. Elles sont inclinées. Ainsi qu'on l'aura compris la languette 63 forme des moyens de liaison en rotation de la pièce menée avec les moyens de support 51 en étant fixée à l'une de ses extrémités aux moyens de support 51 et à l'autre de ses extrémités au bras radial 62, tandis que l'autre languette 63' sert uniquement au stockage pour éviter un basculement de la pièce menée et formation d'un ensemble manipulable et transportable contenu dans le boîtier 51. Les languettes 63, 63' contribuent au maintien axial de la pièce menante rotative.

La pièce menée 32 porte intérieurement, ici à sa périphérie interne, une portion de support pour attelage de l'organe de débrayage 1. Ici il s'agit d'un rebord 20 ouvert centralement sous forme d'un flasque radial formant les moyens de positionnement 2 de la butée 1. Ce flasque 20 est disposé à l'extrémité de la couronne 36 opposé au fond 38 et s'étend radialement en direction de l'axe pour réduction de l'encombrement axial.

La butée 1 est du type standard, en étant formée par un roulement à billes 10 dont la bague interne est tournante et présente un rebord radial pour appui contre le dispositif débrayeur, et, la bague externe est non tournante en présentant un flasque radial 11 dirigé vers l'axe pour appui sur le flasque 20. La butée 1 est accrochée au flasque 20 par des moyens élastiques 12 à action axiale. Ces moyens 12 consistent en une pluralité de pattes axiales traversant l'ouverture centrale des flasques 11, 20, dont l'une des extrémités est en appui contre le flasque 20 et dont l'autre extrémité est reliée à une couronne annulaire inclinée élastique dotée d'un bourrelet pour appui sur le flasque 11.

Le diamètre externe de la butée 1 est plus petit que le diamètre interne de la couronne 36 de manière à ce que la butée de débrayage puisse jouir, dans un plan radial, d'une latitude omnidirectionnelle de cheminement par rapport à la pièce 32 pour son autocentrage, et obtention d'un autocentrage maintenu comme décrit dans le document FR-A-1 467 848.

Le dispositif fonctionne de manière suivante.

Lorsque pour débrayer on tire sur le câble 4 dans le sens de la flèche F (figure 1), la pièce 31 est entraînée en rotation dans le sens de la flèche F1 (figure 6). Dans les figures 5 et 6, on voit le déplacement relatif des pièces 31 et 32 au cours de l'opération de débrayage, la figure 5 représentant la position embrayée pour laquelle la butée 1 est la plus proche du flasque 52. Lorsque la pièce menante est entraînée par le câble 4, les rampes 39 tournent et les billes 70 se déplacent le long des rampes 39 et 60, ainsi la pièce menée 32, fixe en rotation grâce à la languette 63, se déplace en translation dans le sens de la flèche F2 (figure 6) en direction opposée au flasque 52. Grâce à celà la butée de débrayage 1 n'est pas soumise à un mouvement de rotation risquant de détruire l'autocentrage.

On appréciera que les frottements sont réduits au minimum du fait du montage en cascade des moyens antifriction et du palier antifriction, ici deux roulements à billes l'un 37 à contacts obliques, l'autre 39,60,70 à rampes et à contacts obliques.

La languette 63, assure un rappel élastique de la pièce 32 en direction de la paroi transversale 52 et maintien en translation la pièce menante. Ainsi, la pièce menée 32 est guidée, centrée et portée par la pièce menante 31 et assure indirectement le maintien axial de la pièce menante 31. Lorsque l'on veut réembrayer on annule la tension sur le câble 4 et la pièce menée 32 est alors rappelée dans sa position initiale par l'action conjuguée des languettes et du dispositif débrayeur de l'embrayage.

On notera qu'en position embrayage engagé, le dispositif débrayeur de l'embrayage, le plus souvent un diaphragme, est en contact permanent avec la butée de débrayage en sorte qu'il exerce une action sur la pièce menée et contribue au maintien axial de la pièce menante par l'intermédiaire des rampes 39 et 60.

On appréciera que le dispositif de commande selon l'invention forme avec le boîtier 51, un module monobloc mécanique peu encombrant axialement, de montage aisé et rapide.

A la figure 9, les pièces déjà décrites dans les figures 1 à 8 seront affectées de leur référence augmentée de 100. Ainsi, on voit en 105 le module et en 131 la pièce menante avec son flasque transversal 133 en forme de secteur. La rainure 135 de montage du câble 104, n'est pas à distance constante de l'axe, en étant le plus éloigné de l'axe, au niveau de l'extrémité circonférentielle du flasque 133 opposée au point d'ancrage du câble 104.

Grâce à celà l'effort du câble 104 est lors de l'opération de débrayage exercé d'abord sur un grand rayon puis sur un rayon plus petit, ce qui permet, pour un effort constant sur la pédale, d'exercer un effort plus important sur les moyens de commande 103 au début de la manoeuvre. Cet effet de démultiplication variable pourrait également être obtenu en faisant varier l'angle des rampes d'une de leur extrémité à l'autre. La figure 10 montre une variante adaptée à la commande d'une butée agissant non pas en poussée comme dans les figures 1 à 8, mais en traction sur l'embrayage et dans celle-ci les pièces des figures 1 à 8 sont affectées de leur référence augmentée de 200. La pièce menée 232 se déplace en translation en s'éloignant du dispositif débrayeur 200 lors d'une opération de débrayage.

Les moyens de positionnement 202 sont formés par un flasque radial 220 solidaire de la pièce 232 auquel est attelé une pièce tubulaire 221. Un jeu radial existe entre la pièce 221 et le flasque 220. La pièce 221 est reliée au flasque 220 par une liaison d'autocentrage grâce à une rondelle Belleville prenant appui sur la pièce 221 pour sollicitation du flasque 220, contre une rondelle calée axialement par un circlips sur la pièce 221. La butée 201 est attelée au dispositif débrayeur 200, ici les extrémité des doigts d'un diaphragme, et est accrochée, à la pièce tubulaire 221 par un montage à clipsage mettant en oeuvre un organe élastique de retenue 213. Un ressort 214 est prévu entre le flasque transversal 252 de la pièce 232 afin de pousser celle-ci en direction du dispositif débrayeur 200. Le ressort 214 exerce une charge supérieure à l'effort nécessaire pour le clipsage, son action sur les moyens de commande permettant, au montage, la solidarisation automatique des moyens de positionnement 202 à la butée. En variante, non représentée la butée 201 pourrait être solidaire de la pièce 221 et être accrochée à une pièce d'accostage attelée au dispositif débrayeur.

On notera que la position relative des pièces menante et menée est inversée, la pièce menante étant la plus proche du dispositif débrayeur 200. A la figure 11 on remplace le câble par une tige 304 agissant en poussée sur un flasque 333 solidaire de la pièce menante 331. Cette tige 304 est commandée en déplacement par un vérin hydraulique situé dans une partie amont de la commande d'embrayage. On notera que le flasque 333 s'étend radialement et qu'il est doté d'un évidement pour logement d'un bloc élastomère 340 interposé entre la tige 304 et ledit flasque.

Dans cette réalisation les deux languettes 363, 363' sont fixées au flasque transversal du module 305 et aux bras 362.

Ainsi qu'il ressort à l'évidence de la description et des dessins, le roulement 37, 237 à contacts obliques est disposé radialement au delà du flasque 20,220 formant écran protecteur, en sorte qu'une bonne assise est obtenue par les moyens de commande, lesdits roulements encaissant les mouvements d'oscillation engendrés par le diaphragme, dont les doigts ne sont pas tous dans le même plan. On notera que le module 5,205 peut être livré en étant équipé ou non de la butée de débrayage 1.

Bien entendu, l'invention ne se limite pas aux formes de réalisation décrites et représentées. Par exemple, il est possible de remplacer les languettes 63 par un montage à cannelures entre la paroi axiale 53 et la pièce 32 pour maintien en rotation de ladite pièce menée 32, ou par tout autre montage faisant collaborer des formes complémentaires.

Comme visible à la figure 4 en pointillés, il est possible de fixer une lame ressort 64 sur les moyens support 51 et de relier ladite lame à une lampe témoin qui s'allumera lorsque l'extrémité circonférentielle du flasque 33 viendra en contact avec ladite lame pour détecter l'usure, le câble 4 pouvant servir avantageusement à l'alimentation électrique.

L'organe de débrayage peut ne pas comporter de roulement à billes et être doté d'une bague constituée par un mélange de résine thermo-durcissable, de charges lubrifiantes et de fibres synthétiques infusibles comme décrit dans le document FR-A-2 499 646. De même les rampes 60,39 peuvent être en un matériau distinct des pièces dont elle sont solidaires et être constituées par un mélange à base de téflon formant des moyens antifriction.

La bague extérieure de la butée 1 peut être mobile et la bague intérieure fixe dans ce cas le flasque 20 peut être prolongé par un retour axial pour obtention d'une disposition analogue à la figure 3 du document FR-A-1 467 848.

La pièce menante peut être dentée extérieurement pour engrènement avec une roue dentée d'un dispositif de démultiplication entraîné par un moteur électrique. Comme visible dans les figures 12 et 13 le module peut être équipé d'un dispositif de rattrapage d'usure. Dans cette variante dans laquelle les éléments analogues à ceux du mode de réalisation de la figure 1 portent les mêmes références augmentées de 500. La pièce menante 531 porte libre à rotation une pièce 600. Le flasque 533 porte un cliquet denté 601 traversant une ouverture 602 pratiquée dans la pièce 600 pour engrènement avec des dentures que possède extérieurement la pièce 531.

Un ressort 603 s'appui sur les pièces 600, 533 et sollicite le cliquet 601 en direction de la pièce 531 pour engagement avec celle-ci.

Le flasque 533 est monté à articulation sur la pièce 600 évidée à cet effet.

Un ressort 604 est interposé axialement entre la pièce 600 et un épaulement 605 de la pièce menée. Il permet un appui constant de la butée contre le diaphragme 500, monté de manière pivotante sur le couvercle 610 de l'embrayage par des pattes 611 issues de celui-ci.

Il porte sur un plateau de pression 612 pour serrage d'un disque de friction (non représenté) solidaire en rotation de l'arbre d'entrée de la boîte de vitesses 614. On voit en 615 une partie de la boîte de vitesses, et en 616 une pièce intermédiaire fixée sur la boîte de vitesses et sur laquelle vient s'engager à centrage le flasque 552 grâce à des bossages 617.

On notera que dans cette réalisation le flasque 552 présente un retour axial 620 sur lequel vient s'engager la bague intérieure du roulement à billes à contacts obliques 537, dont la bague extérieure est constituée par la pièce menée elle-même. Les moyens élastiques 512 consistent en une rondelle ondulée s'appuyant sur le flasque 520 et dotée de pattes axiales traversant l'ouverture centrale des flasques 520, 511, chacune d'entre-elles présentant à son extrémité un crochet venant prendre appui sur le flasque 511 comme décrit à la figure 8 du document FR-A-2 337 281

Enfin, on voit en 630 les moyens de clipsage sous forme de crochets et de dents prévues entre le couvercle 554 et la paroi 553 tout deux avantageusement en matière plastique. On notera que la disposition des languettes 563 est identique à celle de la figure 11.

En se rapportant à la figure 14, on voit que dans la position embrayage engagée le cliquet 601 n'est pas en contact avec la denture de la pièce menante 531 du fait qu'il prend appui sur une butée 631 en forme de coin incliné (figure 13) de la paroi 553 du boîtier 551.

Dans la position de débrayage à l'action du câble, renforcée par l'action du ressort 603 doté d'une patte centrale recouvrant la rainure du flasque pivotant 533 et de deux pattes latérales s'appuyant sur le flasque 533 de part et d'autre de la rainure, permet un basculement du cliquet 601 par éloignement du flasque 533 par rapport à la butée 631. On notera que le flasque 533, pour son pivotement, est doté de part et d'autre de sa rainure d'ergots circulaires 632 coopérant avec la périphérie externe de la pièce 600 dotée d'une portion plate en retrait raccordée par une rampe à la partie principale de la périphérie externe de ladite pièce 600.

Le ressort 603 possède un retour radial doté d'une ouverture centrale dans laquelle s'engage la butée 540 du câble, ledit retour prenant appui à son extrémité sur la pièce 600.

En variante (non représentée) la pièce 600 peut être échancrée pour recevoir les ergots du flasque 533 permettant un basculement du cliquet 601 on obtient un engrènement de celui-ci avec les dentures de la pièce 531. Lors d'une usure le diaphragme 500 exerce un effort sur la butée lequel est transformé en mouvement de rotation de la pièce 531 grâce aux moyens de rampe, ce qui permet d'obtenir un rattrapage d'usure.

Ainsi qu'on l'aura compris, le retour axial 620 permet une bonne absorption des effort radiaux. Dans ces conditions il est possible de remplacer le roulement par un palier anti-friction par exemple à base de téflon.

On notera que le maintien axial de la pièce menante peut être assurée par le roulement 537 lui-même. Par exemple la bague intérieure peut être montée fixe en translation sur le retour 620 et le flasque 552. Dans ce cas ladite bague présente un petit redan de sorte que l'on monte la pièce menante par clipsage

Enfin, on notera que le dispositif de commande selon l'invention peut être monté en bout de l'ensemble d'entraînement comme décrit dans le document EP-A-0 199 642 en étant fixé sur le carter de l'embrayage fixe en translation. Dans ce cas, le flasque 52 peut être fermé, les pièces menante et menée étant du type décrit ci-dessus.

## Revendications

1. Dispositif de commande d'embrayage, notamment pour véhicules automobiles, du genre comportant, pour la manoeuvre d'un organe de débrayage (1,201) destiné à agir sur le dispositif débrayeur (200,500) d'un embrayage, des moyens de support (51,251,551) dudit organe de débrayage, destinés à être fixés sur un support fixe en translation, des moyens de commande (3,103,203,303) portés par lesdits moyens de support et comportant, d'une part, une pièce menante (31,131,231,331,551), portée par lesdits moyens de support en étant fixe en translation et mobile en rotation, destinée à être soumises à des moyens d'actionnement (4,104,304,504), et, d'autre part, une pièce menée creuse (32,232,532), mobile en translation et fixe en rotation en étant liée en rotation aux moyens de support (51,251,551) par des moyens de liaison en rotation (63), destinée à agir sur ledit organe de débrayage, dans lequel des moyens de rampes complémentaires (39, 60) sont prévus respectivement sur ladite pièce menée et sur ladite pièce menante montées de manière coaxiale, pour entraînement de la pièce menée par la pièce menante et déplacement axial de ladite pièce menée par rapport auxdits moyens de support, caractérisé en ce que la pièce menante (31,131,231,331,531) est creuse, en ce que ladite pièce menante porte à sa périphérie externe des moyens d'engagement (33-35,133-135,533), pour engagement mutuel avec les moyens d'actionnement (4,104,304,504), en ce que la pièce menée (32,232,532) est montée dans le prolongement axial de la pièce menante (31,131,231,331,531) et en ce que ladite pièce menée porte intérieurement une portion de support (20,220,520) pour attelage de l'organe de débrayage (1,201) auxdits moyens de commande (3,103,203,303).

2. Dispositif selon la revendication 1, caractérisé en ce que la pièce menée (32,232,532) est portée par la pièce menante (31,131,231,331,531).

3. Dispositif selon la revendication 1 ou 2, caractérisé en ce que la face transversale extrême de la pièce menante (31,131,231,331,531) tournée vers la pièce menée (32,232,532) est conformée en rampes (39), et en ce que la pièce menante (32) a globalement la forme d'un cylindre creux.

4. Dispositif selon la revendication 3, caractérisé en ce que la pièce menée (32), de forme annulaire, présente deux couronnes (34, 36) coaxiales dirigées axialement et espacées radialement de manière à ce que la pièce menante (31) puisse pénétrer entre lesdites couronnes.

5. Dispositif selon la revendication 4, caractérisé en ce que les deux couronnes (34, 36) sont réunies par un fond (38) à partir duquel s'érigent des rampes (60) en direction de l'extrémité libre de la couronne la plus externe (34), lesdites rampes ayant une forme complémentaire à celle de la pièce menante (31) et la couronne la plus externe (34) recouvrant partiellement la périphérie externe de la pièce menante (31).

**6.** Dispositif selon l'une quelconque des revendications précédentes dans lequel des moyens antifriction (70) sont interposés entre les moyens de rampes complémentaires (39, 60) des parties menante (31) et menée (32) et dans lequel la pièce menante (31,131,231,331,531) est montée sur les moyens de support (51,251,551) par l'intermédiaire d'un palier antifriction (37, 237,537), caractérisé en ce que le palier antifriction (37,237,537) est prévu entre lesdits moyens de support et l'extrémité adjacente auxdits moyens de support de la pièce menante (31,131,231,331,531) et en ce que ledit palier antifriction et lesdits moyens antifriction sont montés en cascade, lesdits moyens de rampes complémentaires étant montés bout à bout.

**7.** Dispositif selon la revendication 6, caractérisé en ce que ledit palier antifriction (37,257,537) consiste en un roulement à billes à contacts obliques et en ce que la pièce menante (31,131,231,331,531) forme elle-même l'un des bagues dudit roulement à son extrémité adjacente à un flasque transversale (52,254,552), que présentent lesdits moyens de support (51,251,551) à cet effet.

**8.** Dispositif selon l'une quelconque des revendications précédentes, caractérisé en ce que les moyens de blocage en rotation consistent en au moins une languette (63) à rappel élastique.

**9.** Dispositif selon la revendication 8, caractérisé en ce que ladite languette (63) assure un rappel élastique de la pièce menée en direction d'une paroi transversale (52), appartenant auxdits moyens de support (51), et constitue un moyen de maintien en translation de la pièce menante (31).

**10.** Dispositif selon la revendication 8 ou 9, caractérisé en ce que la languette (63) entoure la pièce menante et en ce qu'elle est fixée, à l'une de ses extrémité aux moyens de support (51) et à l'autre de ses extrémité à un bras radial (62) que présente radialement la pièce menée (32) à cet effet.

**11.** Dispositif selon l'une quelconque des revendications précédentes, caractérisé en ce que la portion de support (20,220,520) de la pièce menée (32) comporte un flasque radial (20,220,520), ouvert centralement, dirigé vers l'axe de l'ensemble et s'étendant à la périphérie interne de la pièce menée (32,232,532).

**12.** Dispositif selon l'une quelconque des revendications précédentes, caractérisé en ce que les moyens d'engagement (33-35,133-135,533) consistent en une rainure (35,135) ménagée à la périphérie externe d'un flasque (33,133,533) porté par la pièce menante (31,131,531) et s'étendant sur un secteur angulaire pour réception d'un câble (4,104,504).

**13.** Dispositif selon la revendication 12, caractérisé en ce que, pour formation d'un rattrapeur d'usure, le flasque (533) porte un cliquet denté (601) monté en articulation sur une pièce (600) portée par la pièce menante (31), ladite pièce (600) présentant une ouverture (602) pour pénétration du cliquet (601) destiné à coopérer avec des dentures de la pièce menante (531).

**14.** Dispositif selon la revendication 12, caractérisé en ce que la rainure (135) s'étend sur une distance variable par rapport à l'axe de l'ensemble.

**15.** Dispositif selon l'une quelconque des revendications précédentes, caractérisé en ce que les moyens de support (51) comportent un flasque de support (52), une paroi d'orientation axiale (53) qui en dépend et un couvercle (54) rapporté sur ladite paroi (53).

**Claims**

**1.** Clutch control apparatus, in particular for motor vehicles, of the kind comprising, for actuation of a declutching member (1, 201) adapted to act on the declutching means (200, 500) of a clutch, support means (51, 251, 551) for the said declutching member, which are adapted to be fixed on a support that is fixed against translational movement, control means (3, 103, 203, 303) carried by the said support means and comprising, firstly a driving member (31, 131, 231, 331, 551) carried by the said support means and being fixed against translational movement but movable in rotation, and being adapted to be acted on by actuating means (4, 104, 304, 504), and secondly, a hollow driven member (32, 232, 532), which is movable in translation and fixed against rotation, being coupled in rotation to the support means (51, 251, 551) by rotational coupling means (63) and adapted to act on the said declutching member, wherein complementary ramp means (39, 60) are provided respectively on the said driven member and on the said driving member which are mounted coaxially, so that the driven member is driven by the driving member and the said driven member is displaced axially with respect to the said support means, characterised in that the driving member (31, 131, 231, 331, 531) is hollow, in that the said driving member carries at its outer periphery engagement means (33-35, 133-135, 533), for mutual engagement with the actuating means (4, 104, 304, 504), in that the driven member (32, 232, 532) is mounted in axial extension of the driving member (31, 131, 231, 331, 531), and in that the said driven member carries an internal support portion (20, 220, 520) for engagement of the declutching member (1, 201) with the said control means (3, 103, 203, 303).

2. Apparatus according to Claim 1, characterised in that the driven member (32, 232, 532) is carried by the driving member (31, 131, 231, 331, 531).

3. Apparatus according to Claim 1 or Claim 2, characterised in that the transverse end face of the driving member (31, 131, 231, 331, 531) that is directed towards the driven member (32, 232, 532) is formed with ramps (39), and in that the driving member (32) is generally in the form of a hollow cylinder.

4. Apparatus according to Claim 3, characterised in that the driven member (32), being of annular shape, has two coaxial crown elements (34, 36) which extend axially and which are spaced apart radially, in such a way that the driving member (31) can penetrate between the said crown elements.

5. Apparatus according to Claim 4, characterised in that the two crown elements (34, 36) are joined together by means of a base portion (38), from which ramps (60) extend towards the free end of the outer crown element (34), the said ramps having a shape complementary to that of the driving member (31), and the outer crown element (34) partially overlapping the outer periphery of the driving member (31).

6. Apparatus according to any one of the preceding Claims in which anti-friction means (70) are interposed between the complementary ramp means (39, 60) of the driving member (31) and driven member (32), and in which the driving member (31, 131, 231, 331, 531) is mounted on the support means (51, 251, 551) by means of an anti-friction bearing (37, 237, 537), characterised in that the anti-friction bearing (37, 237, 537) is arranged between the said support means and the end of the driving member (31, 131, 231, 331, 531) adjacent to the said support means, and in that the said anti-friction bearing and the said anti-friction means are mounted in cascade, the said complementary ramp means being mounted end to end.

7. Apparatus according to Claim 6, characterised in that the said anti-friction bearing (37, 357, 537) comprises an oblique contact ball bearing, and in that the driving member (31, 131, 231, 331, 531) itself constitutes one of the rings of the said bearing at its end adjacent to a transverse plate element (52, 254, 552), which constitutes, for this purpose, a part of the said support means (51, 251, 551).

8. Apparatus according to any one of the preceding Claims, characterised in that the means for preventing rotation comprise at least one resilient tongue (63).

9. Apparatus according to Claim 8, characterised in that the said tongue (63) resiliently biases the driven member towards a transverse wall portion (52) of the said support means (51), and constitutes a means for retaining the driving member (31) in translation.

10. Apparatus according to Claim 8 or Claim 9, characterised in that the tongue (63) surrounds the driving member, and that it is fixed at one of its ends to the support means (51), being fixed at its other end to a radial arm (62) formed for this purpose on the driven member (32).

11. Apparatus according to any one of the preceding Claims, characterised in that the support portion (20, 220, 520) of the driven member (32) comprises a centrally open radial plate element (20, 220, 520), directed towards the axis of the assembly and extending to the inner periphery of the driven member (32, 232, 532).

12. Apparatus according to any one of the preceding Claims, characterised in that the engagement means (33-35, 133-135, 533) comprise a groove (35, 135) formed in the outer periphery of a circumferential element (33, 133, 533) carried by the driving member (31, 131, 531) and extending over an angular sector for receiving a cable (4, 104, 504).

13. Apparatus according to Claim 12, characterised in that, in order to define a wear compensator, the circumferential element (533) carries a toothed pawl (601) which is articulated on a member (600) carried by the driving member (31), the said member (600) having an aperture (602) into which the pawl (601) penetrates, the latter being adapted to cooperate with teeth of the driving member (531).

14. Apparatus according to Claim 12, characterized in that the groove (135) extends over a variable distance with respect to the axis of the assembly.

15. Apparatus according to any one of the preceding Claims, characterised in that the support means (51) include a support plate element (52), an axially orientated wall (53) depending from it, and a cover piece (54) carried on the said wall (53).

**Patentansprüche**

1. Kupplungssteuereinrichtung, insbesondere für Kraftfahrzeuge, von der Art, die für die Betätigung eines Ausrückorgans (1, 201), welches zur Einwirkung auf die Ausrückvorrichtung (200, 500) einer Kupplung bestimmt ist, Stützmittel (51, 251, 551) für das genannte Ausrükkorgan enthält, die zur Befestigung an einer translatorisch feststehenden Stütze der Steuermittel (3, 103, 203, 303) bestimmt sind, welche auf den genannten Stützmitteln aufliegen, enthaltend einerseits ein antreibendes Element (31, 131, 231, 331, 551), welches auf den genannten Stützmitteln aufliegt und translatorisch feststeht und in der Rotation beweglich ist, bestimmt für die Einwirkung von Betätigungsmitteln (4, 104, 304, 504), und andererseits ein angetriebenes Hohlelement (32, 232, 532), welches translatorisch beweglich ist und in der Drehbewegung feststeht sowie drehbeweglich mit den Stützmitteln (51, 251, 551) durch Drehverbindungsmittel (63) verbunden ist, bestimmt zur Einwirkung auf das genannte Ausrückorgan, worin ergänzende Rampenmittel (39, 60) am genannten ange- triebenen Element bzw. an dem genannten antreibenden Element vorgesehen sind, die koaxial angebracht sind, zum Antrieb des angetriebenen Elements durch das Antriebselement und zur axialen Verschiebung des genannten angetriebenen Elements im Verhältnis zu den genannten Stützmitteln, **dadurch gekennzeichnet,** daß das Antriebselement (31, 131, 231, 331, 531) hohl ist und daß das genannte Antriebselement an der Außenperipherie Eingriffsmittel (33-35, 133-135, 533) für den gegenseitigen Eingriff mit Betätigungsmitteln (4, 104, 304, 504) enthält, daß das angetriebene Element (32, 232, 532) in der axialen Verlängerung des Antriebselements (31, 131, 231, 331, 531) angebracht ist und daß das genannte angetriebene Element innen einen Stützteil (20, 220, 520) für die Ankopplung des Ausrückorgans (1, 201) an die genannten Steuermittel (3, 103, 203, 303) aufweist.

2. Einrichtung nach Anspruch 1, **dadurch gekennzeichnet,** daß das angetriebene Element (32, 232, 532) auf dem Antriebselement (31, 131, 231, 331, 531) aufliegt.

3. Einrichtung nach Anspruch 1 oder 2, **dadurch gekennzeichnet,** daß die äußere Querfläche des Antriebselements (31, 131, 231, 331, 531), die dem angetriebenen Element (32, 232, 532) zugewandt ist, zu Rampen (39) ausgebildet ist und daß das Antriebselement (32) im wesentlichen die Form eines Hohlzylinders hat.

4. Einrichtung nach Anspruch 3, **dadurch gekennzeichnet,** daß das ringförmige angetriebene Element (32) zwei koaxiale Kränze (34, 36) aufweist, die axial ausgerichtet und in radialer Richtung so mit einem Zwischenraum versehen sind, daß das Antriebselement (31) zwischen den genannten Kränzen eindringen kann.

5. Einrichtung nach Anspruch 4, **dadurch gekennzeichnet,** daß die beiden Kränze (34, 36) durch einen Boden (38) miteinander verbunden sind, von dem Rampen (60) in Richtung des freien Endes des äußersten Kranzes (34) ausgehen, wobei die genannten Rampen in ihrer Form zu derjenigen des Antriebselements (31) passen und der äußere Kranz (34) die Außenperipherie des Antriebselements (31) teilweise bedeckt.

6. Einrichtung nach einem der vorherigen Ansprüche, wobei zwischen den ergänzenden Rampenmitteln (39, 60) des Antriebselements (31) und des angetriebenen Elements (32) Antifriktionsmittel (70) eingesetzt sind und wobei das Antriebselement (31, 131, 231, 331, 531) an den Stützmitteln (51, 251, 551) über ein Wälzlager (37, 237, 537) angebracht ist, **dadurch gekennzeichnet,** daß das Wälzlager (37, 237, 537) zwischen den genannten Stützmitteln und dem an die genannten Stützmittel des Antriebselements (31, 131, 231, 331, 531) angrenzenden Ende vorgesehen ist und daß das genannte Wälzlager und die genannten Antifriktionsmittel kaskadenförmig angeordnet sind, wobei die genannten ergänzenden Rampenmittel mit den Enden aneinanderstoßen.

7. Einrichtung nach Anspruch 6, **dadurch ge-**

**kennzeichnet,** daß das genannte Wälzlager (37, 257, 537) aus einem Schrägkontakt-Kugellager besteht und daß das Antriebselement (31, 131, 231, 331, 531) selbst an dem an einen Querflansch (52, 254, 552) angrenzenden Ende einen der Ringe des genannten Lagers bildet, den die genannten Stützmittel (51, 251, 551) zu diesem Zweck aufweisen.

8. Einrichtung nach einem der vorherigen Ansprüche, **dadurch gekennzeichnet,** daß die Mittel zur Blockierung der Drehbewegung wenigstens aus einer elastischen Rückhollasche (63) bestehen.

9. Einrichtung nach Anspruch 8, **dadurch gekennzeichnet,** daß die genannte Lasche (63) die elastische Rückholung des angetriebenen Elements in Richtung einer Querwand (52) gewährleistet, die zu den genannten Stützmitteln (51) gehört und ein Mittel zur translatorischen Befestigung des Antriebselements (31) bildet.

10. Einrichtung nach Anspruch 8 oder 9, **dadurch gekennzeichnet,** daß die Lasche (63) das Antriebselement umgibt und daß sie an einem Ende an den Stützmitteln (51) und am anderen Ende an einem radialen Arm (62) befestigt ist, den das angetriebene Element (32) in radialer Richtung zu diesem Zweck aufweist.

11. Einrichtung nach einem der vorherigen Ansprüche, **dadurch gekennzeichnet,** daß der Stützteil (20, 220, 520) des angetriebenen Elements (32) einen in der Mitte offenen radialen Flansch (20, 220, 520) aufweist, der der Achse der Einheit zugewandt ist und sich bis zur Innenperipherie des angetriebenen Elements (32, 232, 532) erstreckt.

12. Einrichtung nach einem der vorherigen Ansprüche, **dadurch gekennzeichnet,** daß die Eingriffsmittel (33-35, 133-135, 533) aus einer Nut (35, 135) bestehen, die in der Außenperipherie eines Flansch (33, 133, 533) angebracht ist, der auf dem Antriebselement (31, 131, 531) aufliegt und sich über einen Winkelsektor zur Aufnahme eines Kabels (4, 104, 504) erstreckt.

13. Einrichtung nach Anspruch 12, **dadurch gekennzeichnet,** daß der Flansch (533) zur Bildung einer Verschleißausgleichseinrichtung eine Zahn-Sperrklinke (601) trägt, die gelenkig an einem auf dem Antriebselement (31) aufliegenden Stück (600) befestigt ist, wobei das genannte Stück (600) eine Öffnung (602) für die Einführung der Sperrklinke (601) aufweist, die dazu bestimmt ist, mit Verzahnungen des Antriebselements (531) zusammenzuwirken.

14. Einrichtung nach Anspruch 12, **dadurch gekennzeichnet,** daß sich die Nut (135) über eine im Verhältnis zur Achse der Einheit variable Entfernung erstreckt.

15. Einrichtung nach einem der vorherigen Ansprüche, **dadurch gekennzeichnet,** daß die Stützmittel (51) einen Stützflansch (52), eine davon abhängige axial ausgerichtete Wand (53) und einen an der genannten Wand (53) angebauten Deckel (54) aufweisen.

FIG.1

FIG.2

FIG.3

FIG.4

FIG.5

FIG.6

FIG.7

FIG.8

FIG.9

FIG.10

FIG.11

FIG.12

FIG.13

FIG.14